# EUROPEAN PATENT SPECIFICATION

(11) **EP 3 379 536 B1**
(45) Date of publication and mention of the grant of the patent: **01.12.2021**
(21) Application number: 18163081.5
(22) Date of filing: 21.03.2018
(51) Int. Cl.: G11B 27/10, G06Q 30/06, H04N 7/18

(54) **VIDEO REPRODUCTION DEVICE AND METHOD**
VORRICHTUNG UND VERFAHREN ZUR VIDEOWIEDERGABE
DISPOSITIF ET PROCÉDÉ DE REPRODUCTION VIDÉO

(30) Priority: 23.03.2017 JP 2017057600
(43) Date of publication of application: 26.09.2018
(73) Proprietor: Toshiba Tec Kabushiki Kaisha, Shinagawa-ku Tokyo (JP)
(72) Inventor: Marumo, Nobuyuki, Tokyo, 141-8562 (JP)
(74) Representative: Hoffmann Eitle

(56) References cited:
- EP-A1- 2 903 005
- US-A1- 2008 184 120
- US-B1- 8 538 820
- US-B1- 8 570 375
- US-B1- 8 570 376

## Description

### CROSS-REFERENCE TO RELATED APPLICATION

This application is based upon and claims the benefit of priority from Japanese Patent Application No. 2017-057600, filed March 23, 2017.

### FIELD

Embodiments described herein relate generally to a video reproduction device and a video reproduction method.

### BACKGROUND

Cameras are often used to record checkout transactions in stores so that mistakes and improprieties can be checked after the fact. If a wide area is recorded by just one camera, it may not be possible to check small details of the sales transactions, and thus several cameras are often used to cover a checkout area.

For example, with certain semi-self-service-type POS systems, transaction items are registered using a registration device operated by a sales clerk, and then settlement is separately performed using a settlement device operated by the customer. In such a system, the operations for registration and settlement can be respectively performed in separate locations. Here, it is conceivable that the respective operations for registration and settlement may have to be recorded by different cameras.

However, when a single transaction is recorded by multiple cameras and it is necessary for multiple recorded videos to be individually checked when verifying the transaction, and thus there is a problem in that a lot of time is required to be spent for this work as each recorded video must be separately checked.

Due to such circumstances, it is desired to easily perform a verification of a sales transaction using a plurality of videos acquired by the separate cameras.

US8570376 B1, SHARMA RAJEEV [US] ET AL, 29 October 2013, discloses capturing multiple video streams of people in an area covered by multiple cameras, a shopping area. The people in each of the video streams are tracked, producing track sequences for each of the people's trips. A "trip" is defined as a person's movement across multiple fields of view of multiple means for capturing images from entrance to exit, such as exit through a checkout, in a physical space. The playback of the track sequences is done serially.

US 2008/184120 A1, OBRIEN-STRAIN EAMONN [US] ET AL, 31 July 2008, discloses a video file being segmented into video segments, and a condensed representation of the video file is then generated, as the concurrent presentation of the video segments in several windows in a display area, over repeating cycles of a loop period.

### SUMMARY OF THE INVENTION

One of the objects of the present invention is to improve prior art techniques and overcome at least some of the prior art problems as for instance above illustrated.

The invention features a transaction review system according to claim 1 and a method of video reproduction according to claim 8; dependent claims provide further advantageous aspects.

### DESCRIPTION OF THE DRAWINGS

FIG. 1 is a perspective view illustrating checkout area of a store in which a POS system according to a first embodiment can be used.
FIG. 2 is a block diagram illustrating aspects of configuration of a POS system and a store computer.
FIG. 3 is a diagram illustrating an example of content of a management table.
FIG. 4 is a diagram illustrating an example of a setting screen.
FIG. 5 is a flowchart illustrating aspects of an information process performed by a CPU.
FIG. 6 is a flowchart illustrating aspects of the information process performed by the CPU.
FIG. 7 is a diagram illustrating an example reading screen.
FIG. 8 is a diagram illustrating an example reproduction screen.
FIG. 9 is a block diagram illustrating aspects of a configuration of a POS system and a store computer according to a second embodiment.
FIG. 10 is a diagram illustrating an example reading screen.
FIG. 11 is a flowchart illustrating aspects of a process performed by a CPU to start reproduction of videos according to the second embodiment.

### DETAILED DESCRIPTION

Embodiments provide a transaction reviewing system including a video reproduction device and a video reproduction method by which it is possible to easily perform a verification based on a plurality of videos acquired by the separate cameras.

According to one embodiment, video reproduction device includes a store computer configured to acquire a plurality of video data from a video data storage device. The video data is acquired by a plurality of cameras and stored in the video data storage device in conjunction with a time indicator. The store computer includes a video reproduction application that when executed cause a processor of the store computer to be configured to: reproduce first video data acquired by a first camera in the plurality of cameras; reproduce second video data acquired by a second camera in the plurality of cameras as shifted by a first offset time from a start time of the first video data; and reproduce third video data acquired by a third camera in the plurality of cameras as shifted by a second offset time from the start time of the first video data. The reproduction of the video data is performed such that at least portions of first video data, the second video data, and the third video data are reproduced simultaneously.

Hereinafter, example embodiments will be described with reference to the accompanying drawings. As an example implementation, a Point-Of-Sale (POS) system including a store computer used as a video reproduction device is described, but the disclosure is not limited to this example.

### FIRST EMBODIMENT

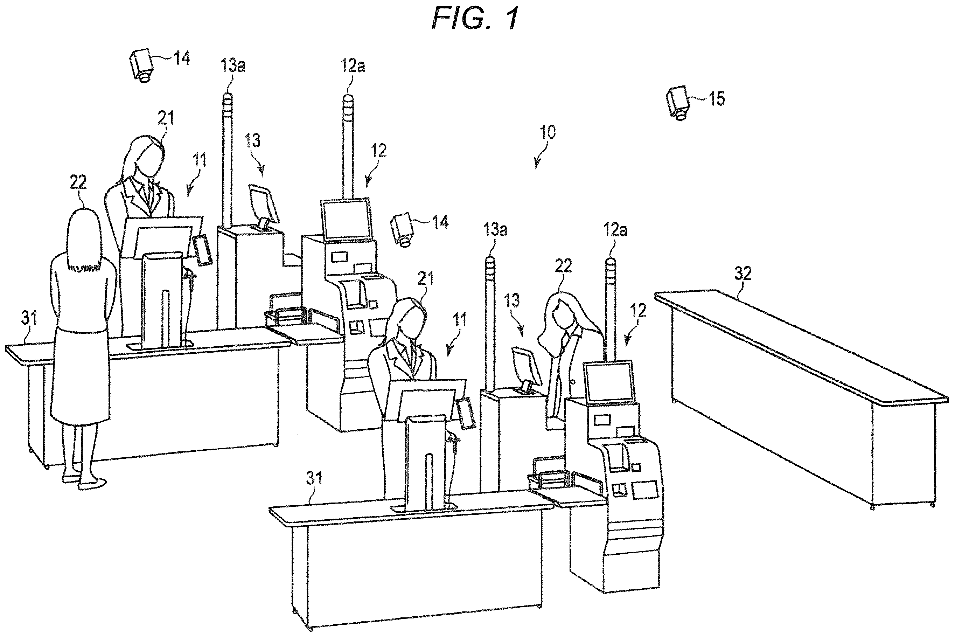

FIG. 1 is a perspective diagram illustrating an example of an aspect of a checkout area in which a POS system according to a first embodiment is adopted.

The POS system 10 includes at least one registration device 11, at least one settlement device 12 or a settlement device 13, at least one camera 14, and at least one camera15. FIG. 1 illustrates a POS system 10 which includes two registration devices 11, a pair of settlement devices 12, a pair of settlement devices 13, two cameras 14, and one camera 15. The number of registration devices 11, settlement devices 12, cameras 14, and cameras 15 is arbitrary, as is the ratio of registration devices 11 to settlement devices 12 and 13.

A sales clerk 21, who has a role referred to as a checker, is an operator of the registration device 11. A customer 22, who settles the retail transaction, is an operator of the settlement devices 12 and 13. However, in some embodiments there may be a case where at least a part of the operation of the registration device 11 is performed by the customer 22. In addition, in some embodiments, the settlement devices 12 and 13 may be operated by a sales clerk 21.

The registration device 11 is attached to a work table 31 as depicted in FIG. 1. If a plurality of work tables 31 is disposed in the checkout area, a plurality of checkout lanes is formed. One settlement device 12 and one settlement device 13 are disposed on each work table 31. One camera 14 is provided with respect to each registration device 11. The camera 14 is attached to a ceiling or the like such that the camera 14 is located above the respective registration device 11. Thus, one registration device 11, one settlement device 12, one settlement device 13, and one camera 14 are installed for each checkout lane.

The registration device 11 registers content of a sales transaction for the customer 22 who enters the checkout lane. The POS system 10 is used in a store, such as a supermarket, for example. In this case, the transaction is a sale of groceries or other commodities. Furthermore, the registration device 11 performs sales registration of the items being purchased. The registration device 11 transmits transaction settlement data to one of the settlement devices 12 and 13 provided on the same checkout lane.

Once either of the settlement devices 12 and 13 receive the settlement data from the registration device 11, a settlement process based on the settlement data can be performed. The settlement devices 12 and 13 may have substantially the same configuration as each other, and may perform a similar processing, however, the locations at which the customers stand to use the settlement devices 12 and 13are different from each other.

The camera 14 photographs an area which includes the registration device 11 and the vicinity thereof. The camera 14 provides video data to a communication network.

The camera 15 is attached to a ceiling or the like above the work table 32 that can be used by the customer 22 to pack and/or bag the purchased items. The camera 15 photographs an area which includes the work table 32 and the vicinity thereof. That is, the camera 15 photographs the customer 22 will the customer 22 is at the work table 32. The camera 15 provides video data to a communication network.

The settlement devices 12 and 13 include cameras 12a and 13a, respectively. The cameras 12a and 13a photograph areas which include operation surfaces of the settlement devices 12 and 13 and the vicinities thereof.

In general, it is possible to use existing and known registration devices 11, settlement devices 12 and 13, and cameras 14 and 15.

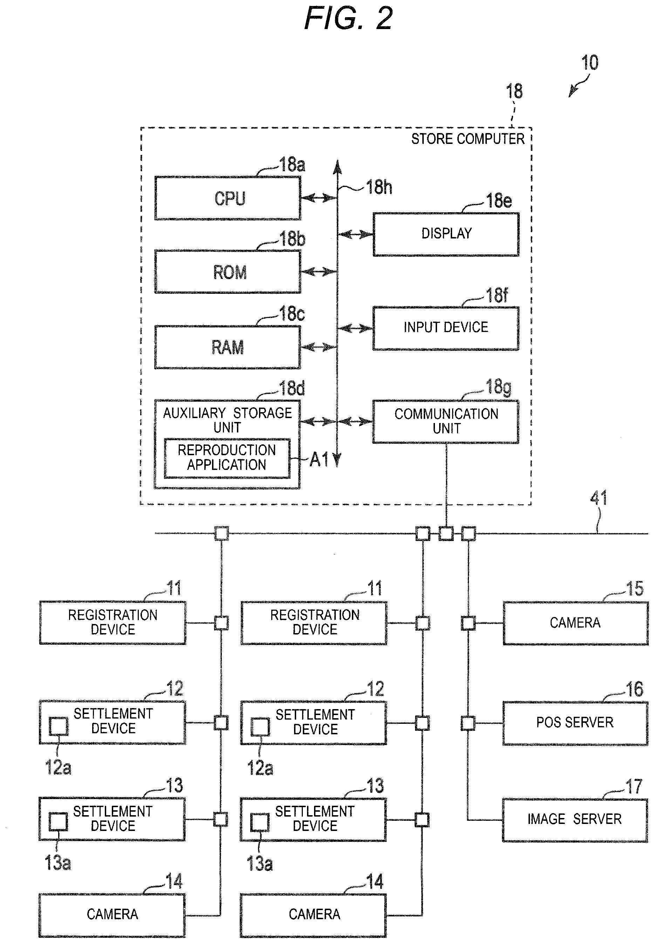

FIG. 2 is a block diagram illustrating a configuration of the POS system 10 and a configuration of a store computer 18 used in this POS system 10.

The POS system 10 includes a POS server 16, an image server 17, and a store computer 18 in addition to the registration devices 11, the settlement devices 12 and 13, and the cameras 14 and 15 previously described. The registration devices 11, the settlement devices 12 and 13, the cameras 14 and 15, the POS server 16, the image server 17, and the store computer 18 are connected to a communication network 41. Although the communication network 41 in this example is a Local Area Network (LAN), the communication network 41 may be another type network, such as the Internet, and may also be provided by combining a plurality of network types.

The POS server 16 can be a so-called store server provided at the store or can be a so-called head office server provided at a head office which manages a plurality of store locations. The POS server 16 accumulates sales transaction data. The POS server 16 generates journal data, stores the journal data in a built-in storage device, and manages the journal data.

The image server 17 receives the video data acquired by the cameras 12a, 13a, 14, and 15 via the communication network, and stores the video data in the built-in storage device. That is, the storage device stores a plurality of video data acquired by separate cameras. It is possible to use, for example, a Network Attached Storage Server (NAS) as the image server 17.

The store computer 18 is an information processing terminal used by a store manager or other person in charge to access various pieces of information in the POS system 10. The store computer 18 includes a Central Processing Unit (CPU) 18a, a Read-Only Memory (ROM) 18b, a RAM (random-access memory) 18c, an auxiliary storage unit 18d, a display 18e, an input device 18f, a communication unit 18g, and a communication system 18h.

The CPU 18a, the ROM 18b, the RAM 18c, and the auxiliary storage unit 18d are connected by the communication system 18h. These parts may be considered to be a computer which processes various pieces of information. The communication system 18h includes a bus line, which has an address bus, a data bus, and the like, and an interface circuit which is used to connect respective units to the bus line. The communication system 18h transmits data and signals w between the connected units.

The CPU 18a controls the respective units of the store computer 18 based on an operating system and an application program which are stored in the ROM 18b and/or the auxiliary storage unit 18d.

The ROM 18b corresponds to a storage part of the computer. The ROM 18b stores the operating system and the application program. In addition, there is a case where the ROM 18b stores data which is referred to as the CPU 18a performs various processes.

The RAM 18c corresponds to a storage part of the computer. The RAM 18c stores data which is referred to as the CPU 18a performs the various processes. Furthermore, the RAM 18c stores data, which is temporarily used as the CPU 18a performs various processes, and is used as a so-called work area of the CPU 18a.

It is possible to use, for example, an Electric Erasable Programmable Read-Only Memory (EEPROM), a Hard Disc Drive (HDD), a Solid State Drive (SSD), or the like as the auxiliary storage unit 18d. The auxiliary storage unit 18d preserves data, which is used as the CPU 18a performs various processes, and data which is generated by a process performed by the CPU 18a. In some embodiments, the auxiliary storage unit 18dstores the application program.

The application program is used to reproduce the video and to perform information processing and may be stored the ROM 18b or the auxiliary storage unit 18d. However, here, it is assumed that the auxiliary storage unit 18d stores a reproduction application A1, which is the relevant application program.

In general, when the store computer 18 is sold (or otherwise transferred), the reproduction application A1 is typically stored in the ROM 18b or the auxiliary storage unit 18d prior to sale/transfer. However, in some instances, the reproduction application A1 may be written into the auxiliary storage unit 18d in full or in part according to an instruction provided post sale/transfer. Likewise, a different version of the reproduction application A1 may be stored in the ROM 18b or the auxiliary storage unit 18d at the time of sale/transfer of the store computer 18 and the new or updated version of the reproduction application A1 may be provided post sale/transfer via a network connection or in a removable recording medium, such as a magnetic disk, a magneto-optic disk, an optical disk, or a semiconductor memory device.

The display 18e displays various pieces of information which include the videos acquired by the cameras 12a, 13a, 14, and 15 and indicated by a data file stored in the image server 17. It is possible to use, for example, a well-known display device, such as a liquid crystal display device, as the display 18e.

The input device 18f permits the input of various instructions from an operator. For example, a keyboard and a pointing device are used as the input device 18f.

The display 18e and the input device 18f need not be integral components of the store computer 18 and may be detachable components provided separately.

The communication unit 18g transmits and receives data via the communication network 41.

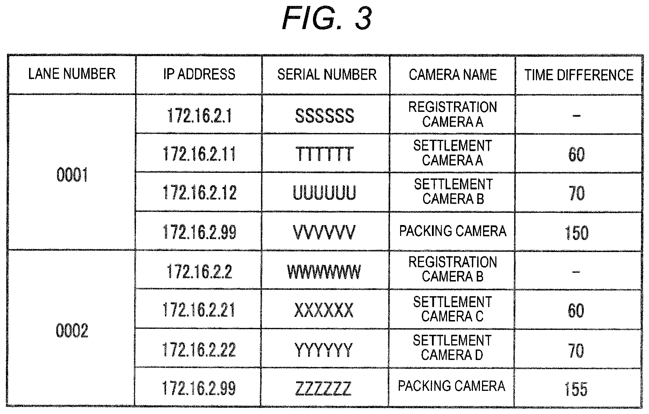

The data stored in the auxiliary storage unit 18d includes a management table (see FIG. 3) used to manage the various cameras 12a, 13a, 14, and 15.

FIG. 3 is a diagram schematically illustrating an example of content of the management table.

The management table is associated with a lane number given to each checkout lane, and includes information relevant to the cameras used record transactions performed in the checkout lane.

In the example of FIG. 3, for example, the management table indicates that particular cameras: "registration camera A", "settlement camera A", "settlement camera B", and "packing camera", which are particular cameras 14, 12a, 13a, and 15, respectively, are used to cover the checkout lane which has the lane number "0001".

Furthermore, for example, the management table shows that "settlement camera A", has an Internet Protocol (IP) address "172.16.2.1" and a serial number "SSSSSS". Likewise, IP addresses and serial numbers given to the settlement devices 12 and 13 that respectively include the cameras 12a and 13a are provided. However, IP addresses and the serial numbers can be given directly to the cameras 12a and 13a.

In addition, the management table indicates that with respect to a video acquired by the camera 14 that is "registration camera A", videos respectively acquired by the cameras 12a, 13a, and 15, which are "settlement camera A", "settlement camera B", and "packing camera", are to be reproduced with a time difference/offset of 60 seconds, 70 seconds, and 150 seconds later, respectively. The pieces of timing information of time correspond to time difference in video reproduction positions associated with the sequencing of the sales transaction on the checkout lane. Thus, the auxiliary storage unit 18d stores the time difference data.

Subsequently, an operation of the POS system 10, which is configured as described above, will be described.

It is possible for a manager or the like to arbitrarily set the content in the management table using the store computer 18. For this reason, if a request to change a system setting, is performed using the input device 18f, the CPU 18a displays a setting screen on the display 18e. The CPU 18a performs an information process related to the setting screen according to the reproduction application A1.

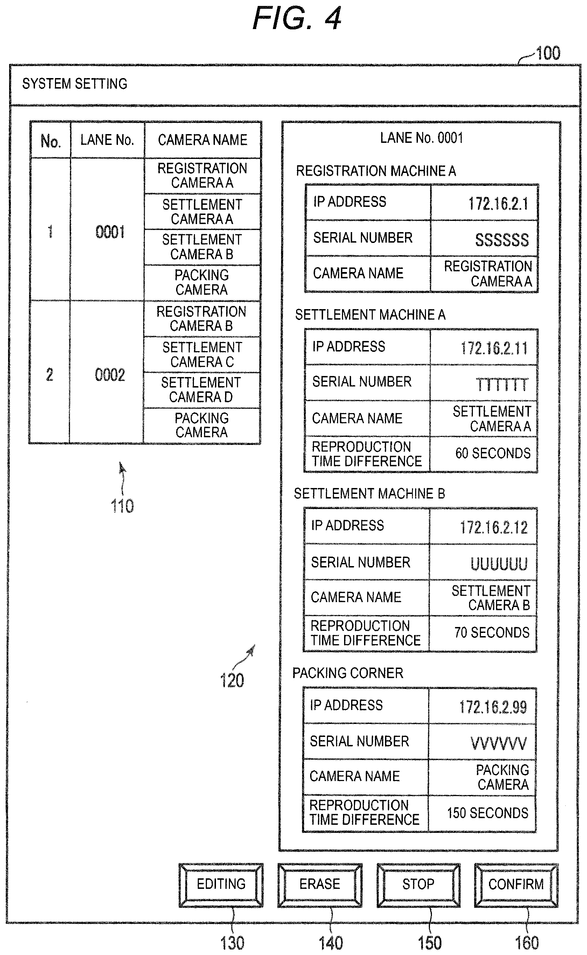

FIG. 4 is a diagram illustrating a setting screen 100 as an example.

The setting screen 100 includes a detailed example of content described in the management table illustrated in FIG. 3. The setting screen 100 includes display areas 110 and 120 and buttons 130, 140 150, and 160.

The display area 110 shows a list which includes a lane number described in the management table and camera names of the cameras corresponding to the checkout lane identified by the lane number in association with the serial number according to the number of checkout lanes.

The display area 120 shows a list of various pieces of information described in the management table in relation to the cameras corresponding to one checkout lane selected in the display area 110. That is, the display area 120 of FIG. 4 is an example of a case where a checkout lane which has the lane number "0001" has been selected in the display area 110.

The button 130 is used for the operator to declare a start of change in setting for an item selected in the display area 120. The button 140 is used for the operator to declare erasure of information related to a camera selected in the display areas 110 and 120 from the management table. The button 150 is used for the operator to declare a stop of the change in setting. The button 160 is used for the operator to confirm the change in setting.

If the operator desires to check or change setting content related to the checkout lane corresponding to a lane number "0002", the operator performs an operation of selecting the lane number "0002" using the input device 18f. If the operation is performed, the CPU 18a changes a screen displayed on the display 18e from the setting screen 100 to a setting screen in which display content in the display area 120 is changed to indicate information described in the management table in association with the lane number "0002".

If the operator desires to change settings displayed in the display area 120, the operator selects a relevant item and presses the button 130 using the input device 18f. The CPU 18a then transitions to a state of receiving editing of information displayed in relation to the selected item. Furthermore, the CPU 18a edits the information displayed in relation to the selected item according to the operation performed by the operator using the input device 18f.

When the operator finishes editing of the displayed information, the operator presses the button 160 using the input device 18f. The CPU 18a then updates the management table such that information related to the selected item is rewritten according to the edited information. Furthermore, the CPU 18a causes the display 18e to display a new setting screen on which content described in the management table after updating is shown.

If the operator starts editing of the displayed information, but then discontinues updating of the management table, the operator presses the button 150 using the input device 18f and the CPU 18a releases the state of receiving the editing, and returns the display to displaying based on the unedited description in the management table.

If the operator desires to erase whole settings for a certain camera, the operator performs an operation of selecting a camera and presses the button 140 using the input device 18f. If such an operation is performed, the CPU 18a updates the management table such that information related to the selected camera is erased. Furthermore, the CPU 18a causes the display 18e to display a new setting screen on which content described in the management table after updating is shown.

Specifically, if the operator desires to change time difference between the reproduction position of the video acquired by the "registration camera A" and the reproduction position of the video acquired by "settlement camera A" to be slightly shorter than that of current setting, then the operator performs an operation of selecting a field displayed as "60 seconds", edits "60 seconds" to, for example, "55 seconds", and then presses the button 160. If such occurs, the CPU 18a rewrites the time difference "60" which is associated with the lane number "0001" and "settlement camera A" to "55" in the management table. Thus, when the CPU 18a performs the information processing based on the reproduction application A1 the management table can be updated.

When the POS system 10 is provided in a retail store, the customer 22 brings a commodity to be purchased up to the checkout area and places the commodity on one of the work tables 31. A sales clerk 21 registers the commodity (e.g., scans or otherwise enters a commodity code corresponding to the commodity) as a purchase commodity, and operates the registration device 11 according to standard checkout sequencing. The registration device 11 prepares a list of the purchased commodities. When the sales clerk 21 designates termination of registration, the registration device 11 generates the settlement data. The registration device 11 causes the settlement data to include, for example, a counter number used to identify the registration device 11, a transaction number issued for each transaction in the registration device 11, a sales clerk code used to identify the sales clerk 21, a date and time at which a registration process starts and a date and time at which the registration process ends, in addition to a list of the purchase commodity. The settlement data may include additional information, such as the amount of money to be tendered, or may not include some of the above-described information. The registration device 11 transmits the settlement data to the communication network 41. Furthermore, the settlement data is received by any one of the settlement devices 12 and 13 which are installed on the same checkout lane as the registration device 11 which transmits the settlement data. The reception may be realized by any one of a method of receiving the settlement data by any one of the settlement devices 12 and 13 according to a predetermined rule, a method of receiving the settlement data by a settlement device designated by the registration device 11.

If the settlement data is received, the settlement device 12 or 13 performs a well-known process for performing settlement on a price of the purchased commodity indicated in the settlement data according to the operation of the customer 22. After the purchase registration is completed at the registration device 11, the customer 22 moves one of the settlement devices 12 and 13 according to guidance of the sales clerk 21, and performs the settlement. After the customer 22 ends the settlement, the customer 22 packs the purchase commodity on the work table 32.

Once the settlement is completed, the settlement device 12 or 13 generates the transaction data and transmits the transaction data to the POS server 16 via the communication network 41. The settlement device 12 or 13 causes, for example, a settlement device code used to identify the settlement device 12 or 13, a date and time at which the settlement is completed, and pieces of information, such as a settlement method, deposited cash amount, and the amount of change, to be included in the transaction data. The settlement device 12 or 13 may or may not cause other pieces of information to be included in the transaction data. Thus, the transaction data is processing result data that includes timing information. Timing information is included in the settlement data that is indicative of a date and time at which the registration process started. If the POS server 16 receives the transaction data, the POS server 16 updates journal data stored in the built-in storage device such that the journal data includes at least a part of the various pieces of information included in the transaction data. In general, the processing performed by the POS server 16 may be the same processing performed by an existing POS server.

The camera 12a performs a photographing operation if the settlement device 12, in which the camera 12a is provided, is in operation. The camera 13a performs the photographing operation if the settlement device 13, in which the camera 13a is provided, is in operation. The camera 14 performs the photographing operation if a relevant registration device 11 is in operation. The camera 15 performs the photographing operation if at least one registration device 11 is in operation. All of the cameras 12a, 13a, 14, and 15 cause time codes to be included in or with the video data. The cameras 12a, 13a, 14, and 15 may automatically perform the photographing operation (s) if various conditions are satisfied, or may perform the photographing operation according to an operation performed by a manager or other employee.

Furthermore, the cameras 12a, 13a, 14, and 15 transmit the video data acquired through the photographing to the image server 17 via the communication network 41. The image server 17 receives the video data transmitted via the communication network 41, and stores video data transmitted from one camera during a predetermined period as one data file. Furthermore, the image server 17 manages respective data files which include video data acquired by the respective cameras.

As described above, the journal data, which indicates a history related to transaction content, is managed by the POS server 16. In addition, the image server 17 manages the videos acquired by photographing user operations of the registration device 11 and the settlement devices 12 and 13, and also the packing work on the work table 32.

If it is necessary to perform subsequent verification on an aspect of checkout related to a certain transaction, the manager performs an operation for instructing a start of reading the journal using the input device 18f in the store computer 18. The CPU 18a receives the manager operation and to permit the journal according to the reproduction application A1 to be read. The CPU 18a may require or otherwise acquire verification as to whether or not the operator seeking to review the transaction is a manager. The authorization processing in this context can be provided using a well-known verification technology. The system may be limited to instructing to start of reading the journal only if the manager authorization is successful.

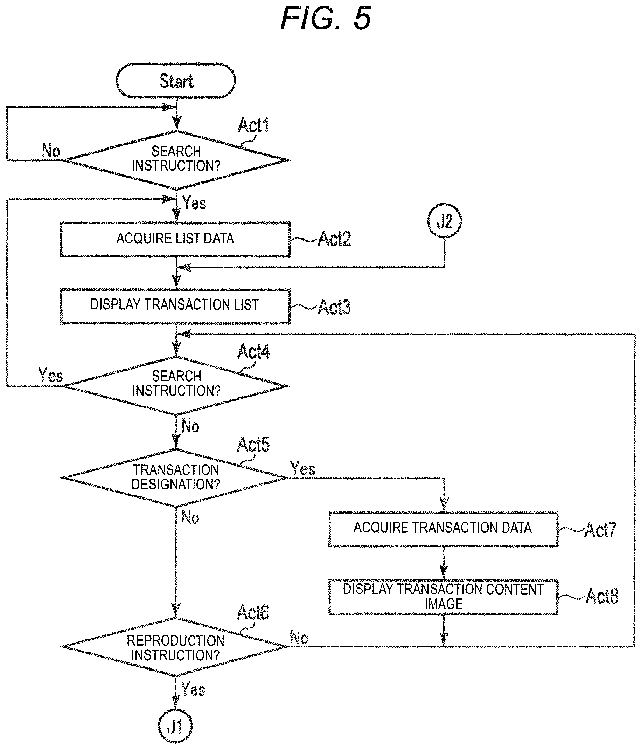

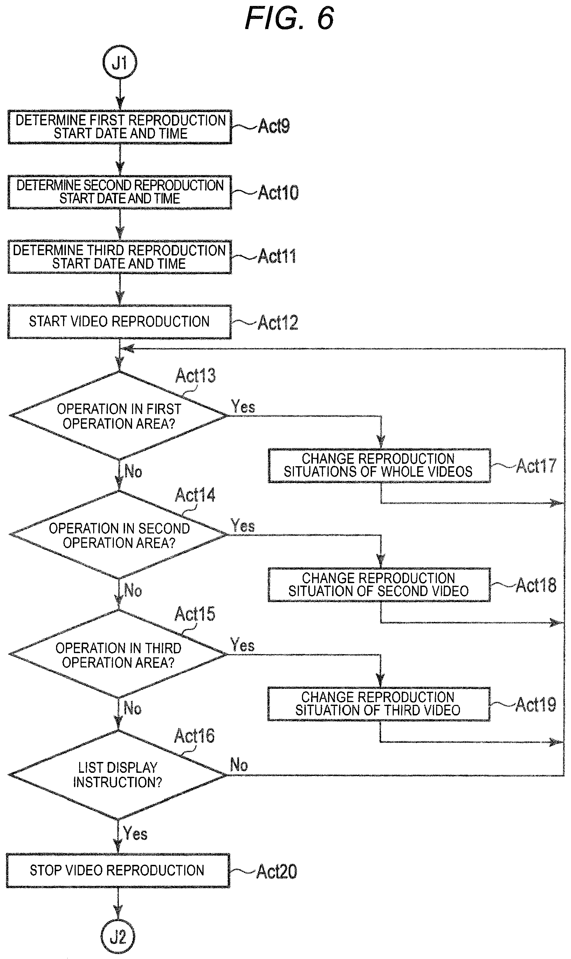

FIGS. 5 and 6 are flowcharts illustrating the information processing related to transaction detail reproduction. FIGS. 5 and 6 illustrate a series of processes which are performed. The specific content associated with the processing which will be further described below is only an example, and it is possible to use various other processes to acquire a similar result.

In Act1, the CPU 18a waits for the inputting or setting of a search condition associated with the transactions, upon input or setting of the search condition, the CPU 18a begins execution of a search according to the search condition. Here, the CPU 18a can cause the display 18e to display a screen for setting of the search condition and a button or area on the screen to receive an instruction to execute the search from a user.

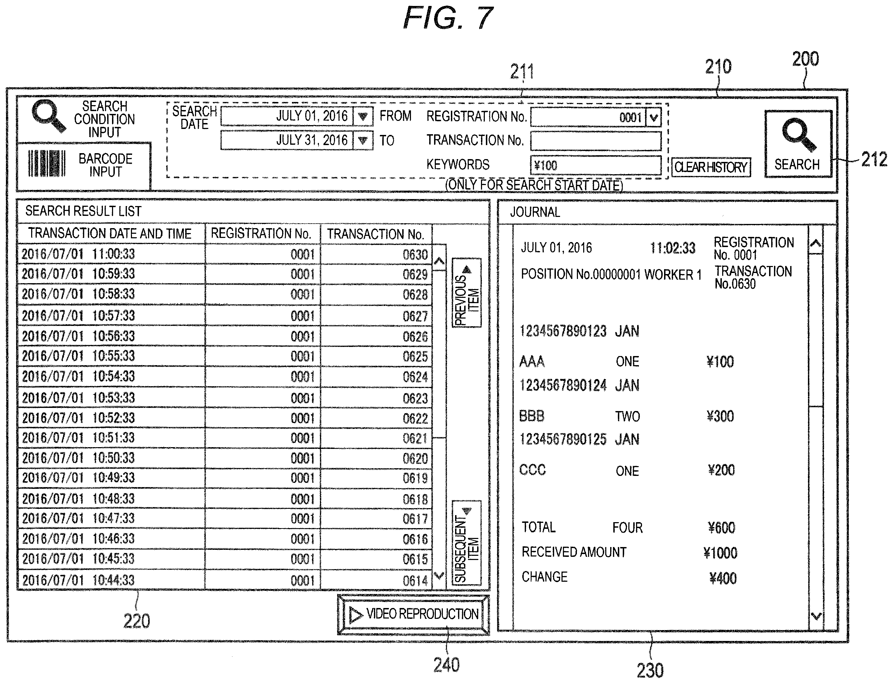

FIG. 7 is a diagram illustrating a reading screen 200 as one possible example.

The reading screen 200 includes an operation area 210, display area 220, display area230, and a button 240.

The operation area 210 includes a setting area 211 and a button 212. The setting area 211 is an area in which the search condition can be set. The setting area 211 includes a plurality of input fields. The input fields are used to receive input of values of search conditions. A start search date of "July 01, 2016" to an end search date of "July 31, 2016", a registration number "0001", and a keyword "¥100" are examples of the possible input values, as illustrated in FIG. 7. Accordingly, if the reading screen is displayed at the start of Act1, the CPU 18a might control the display screen so as not display any values in the input fields. The broken line distinguishing the setting area 211 from the reading screen 200 is presented for purposes of explaining the setting area 211 within the reading screen 200, and is, in general, not required on an actual display screen. The button 212 is used by the operator to instruct execution of the search.

The display area 220 is an area used to display a list of transactions. The display area 230 is an area used to display a transaction content image. Although FIG. 7 illustrates an aspect in which a list of transactions and a transaction content image for a particular transaction are already displayed, in general, the CPU 18a does not cause the reading screen to be populated with search results or the like at the start of ¥ACT 1, but rather the list of the transactions and the transaction content image are the result of a particular search result rather than default images.

The button 240 is used for the operator to declare a start of reproduction of the video stored in the image server 17.

Furthermore, if, for example, the search condition as illustrated in FIG. 7 is set in the setting area 211, the CPU 18a determines Yes in Act1 if an operation of pressing the button 212 has been performed using the input device 18f, and proceeds to Act2.

In Act2, the CPU 18a acquires a list of the transactions data, which includes content that coincides with the search condition settings, from the POS server 16. Specifically, the CPU 18a requests list data from the POS server 16 with a notification of the set search condition. In response, the POS server 16 extracts the transaction data matching the search settings from the journal data, and transmits the list data, which indicates a list of information used to identify the transaction data, to the store computer 18. Here, the CPU 18a acquires the list data via the communication unit 18g. In the example embodiment, the information used to identify the transaction data is a combination of a transaction date and time, a register/counter number, and a transaction number.

In Act3, the CPU 18a causes the display 18e to display the list of the transactions based on the list data. The list of the transactions is a list of pieces of information used to identify the transaction data. Specifically, the CPU 18a updates the reading screen displayed on the display 18e with the list of the transactions displayed in the display area 220 based on the list data acquired in Act2.

In Act4, the CPU 18a checks whether or not an additional search instruction, similar to the above search instruction has been given. Furthermore, the CPU 18a determines No if the operation for the additional search instruction is not performed, and proceeds to Act5.

In Act5, the CPU 18a checks whether or not one of the transactions displayed in the list of the transactions has been designated or otherwise selected by the user. The CPU 18a determines No if the operation for the designation has not been performed, and proceeds to Act6.

In Act6, the CPU 18a checks whether or not there has been an instruction to reproduce video. Furthermore, the CPU 18a determines No if the operation for the reproduction instruction has not been performed, and returns to Act4 if not.

Thus, in Act4 to Act6, the CPU 18a waits for any one of a search instruction, a transaction designation, and a reproduction instruction to be performed.

If it is difficult to find a particular transaction from the displayed list of the transactions and a search is attempted under different search conditions, the operator performs an operation by pressing the button 212 using the input device 18f after changing the search condition displayed in the setting area 211. Thereafter, the CPU 18a determines Yes in Act4, performs the processes in Act2 and Act3 again, and returns to waiting states in Act4 to Act6.

If it is possible to find the desired transaction from the displayed list of the transactions, the operator performs an operation of designating the desired transaction using the input device 18f. For example, the operator performs an operation of double-clicking to identify the particular transaction using the input device 18f. Thereafter, the CPU 18a determines Yes in Act5, and proceeds to Act7.

In Act7, the CPU 18a acquires the transaction data related to the transaction designated as described above. Specifically, the CPU 18a requests the transaction data from the POS server 16 by a notification of the information used to identify the designated transaction. In response, the POS server 16 extracts the transaction data related to the transaction identified using the notified information, from the journal data, and transmits the transaction data to the store computer 18. Here, the CPU 18a acquires the transaction data via the communication unit 18g. Thus, if the CPU 18a performs the information process based on the reproduction application A1, the computer which uses the CPU 18a functions as a result reading means for reading the transaction data.

In Act8, the CPU 18a causes the display 18e to display the transaction content image based on the transaction data. The transaction content image is, for example, as illustrated in display area 230 of FIG. 7. Specifically, the CPU 18a updates the reading screen displayed on the display 18e in the display area 230 based on the transaction data acquired in Act7. Thus, if the CPU 18a performs the information process based on the reproduction application A1, the computer which uses the CPU 18a realizes a function as the display means for displaying the processing result data through cooperation with the display 18e. Furthermore, the CPU 18a returns to the waiting states in Act4 to Act6.

Thus, it is possible for the operator to check content related to a past transaction prior to video reproduction. Furthermore, if the operator desires to check the video related to a particular transaction (hereinafter, referred to as a designated transaction), the operator presses the button 240 using the input device 18f. Thereafter, the CPU 18a determines Yes in Act6, and proceeds to Act9 of FIG. 6. Meanwhile, in a state in which no transaction has been designated, the video to be reproduced has not yet been determined, and thus it is not possible to start reproducing the video according to a designation of a transaction. Accordingly, in such a state, the CPU 18a ignores the pressing of the button 240 or causes the button 240 not to be included or otherwise selectable in the reading screen.

In Act9, the CPU 18a determines a first reproduction start date and time. The first reproduction start date and time is a reproduction start location related to the video acquired by the camera 14 corresponding to the registration device 11, which performed the registration process related to the designated transaction. The CPU 18a determines a date and time at which the registration process related to the designated transaction starts, or a date and time offset from the registration start time by a predetermined amount, as the first reproduction start date and time.

In Act10, the CPU 18a determines a second reproduction start date and time. Specifically, the CPU 18a determines a time difference, which already set with respect to the cameras 12a and 13a, included in the settlement devices 12 and 13 that performed the settlement processes related to the designated transaction, with reference to the management table. The CPU 18a determines the second reproduction start date and time as a date and time which is offset by the time difference from the first reproduction start date and time. The second reproduction start date and time is a reproduction start location related to the videos acquired by the cameras 12a and 13a related to the designated transaction.

In Act11, the CPU 18a determines a third reproduction start date and time. Specifically, the CPU 18a determines a time difference, which is set with respect to the camera 15 related to the checkout lane on which checkout for the designated transaction was performed, with reference to the management table. Furthermore, the CPU 18a determines the third reproduction start date and time as a date and time which is offset by the time difference from the first reproduction start date and time. The third reproduction start date and time is a reproduction start location related to the video acquired by the camera 15.

In Act12, the CPU 18a starts reproducing the videos. Specifically, the CPU 18a changes the display screen of the display 18e from the reading screen to a reproduction screen.

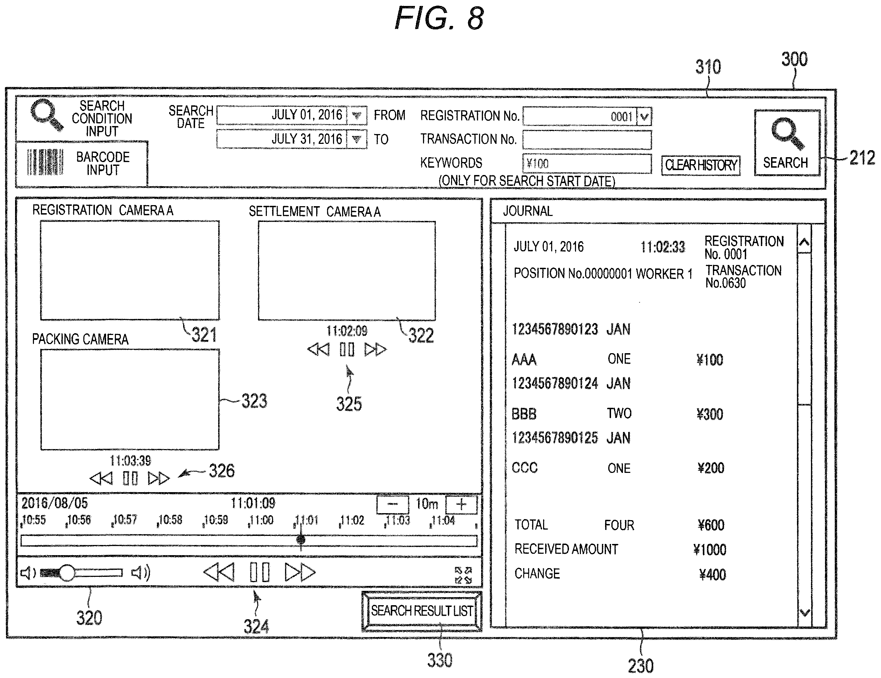

FIG. 8 is a diagram illustrating a reproduction screen 300 as an example. In FIG. 8, the same reference symbols are attached to the same display elements as in FIG. 7.

If the reading screen 200 is displayed on the display 18e and the operation of pressing the button 240 is performed, the reproduction screen 300 will be displayed in the display 18e instead of the reading screen 200.

The reproduction screen 300 includes a display area 230, an area 310, a reproduction area 320, and a button 330. That is, the reproduction screen 300, in general, leaves the display area 230 from the reading screen 200 as it is and this display area 230 is thus provided with the area 310, the reproduction area 320 and the button 330.

The area 310 indicates information similar to that of the operation area 210. However, the CPU 18a does not receive any operation of the operator in the area 310. Therefore, the CPU 18a provides a grayed out display in the area 310.

The reproduction area 320 includes videos 321, 322, and 323, a first operation area 324, a second operation area 325, and a third operation area 326.

The video 321 is a video acquired by the camera 14 corresponding to the registration device 11 for the designated transaction. The video 322 is a video acquired by the cameras 12a and 13a for the designated transaction. The video 323 is a video acquired by the camera 15 for the designated transaction. Here, the CPU 18a acquires three types of video data related to the designated transaction from the image server 17, and includes the three types of video data as the videos 321, 322, and 323, respectively, in the reproduction area 320. FIG. 8 illustrates only outer frames for the videos 321, 322, and 323, and actual images thereof are not specifically illustrated in the drawing. When the videos are reproduced, it is possible to use a well-known streaming reproduction technology or the like for reproduction purposes. At this time, the CPU 18a reads a plurality of video data stored in the storage device of the image server 17. Thus, if the CPU 18a performs information processing based on the reproduction application A1, the computer which uses the CPU 18a functions as video reading means. In addition, although the CPU 18a simultaneously starts reproduction of the videos 321, 322, and 323, the CPU 18a requests that respective start locations of the videos 321, 322, and 323 be the first to third reproduction start dates and times, which are determined as described above. Thus, if the CPU 18a performs the information processing based on the reproduction application A1, the CPU 18a functions as reproduction means for simultaneously reproducing a plurality of videos while shifting the reproduction positions of each reproduced video by a predetermined time.

The first operation area 324, the second operation area 325, and the third operation area 326 include well-known buttons used to control video reproduction.

The button 330 is used for the operator to request a return of the display 18e to the reading screen.

In Act13, the CPU 18a checks whether or not an operation in the first operation area has been performed using the input device 18f. Furthermore, if the operation is not performed, the CPU 18a determines No, and proceeds to Act14.

In Act14, the CPU 18a checks whether or not an operation in the second operation area has been performed using the input device 18f. If the operation is not performed, the CPU 18a determines No, and proceeds to Act15.

In Act15, the CPU 18a checks whether or not an operation in the third operation area has been performed using the input device 18f. If the operation is not performed, the CPU 18a determines No, and proceeds to Act16.

In Act16, the CPU 18a checks whether or not an operation instructing the list of the transactions to be displayed has been performed using the input device 18f. If this operation is not performed, the CPU 18a determines No, and proceeds to Act13.

Thus, in Act13 to Act16, the CPU 18a waits for an operation in any one of the first to third operation areas or the instruction to display the list of the transactions.

If the operator desires to simultaneously change reproduction situations of the three videos 321, 322, and 323 which are being reproduced, the operator performs the operation in the first operation area using the input device 18f. Thereafter, the CPU 18a determines Yes in Act13, and proceeds to Act17.

In Act17, the CPU 18a simultaneously changes the reproduction situations of the three videos 321, 322, and 323 according to the operation in the first operation area. For example, if an operation instructing pausing of the video reproduction is performed, the CPU 18a performs stops reproductions of the videos 321, 322, and 323 simultaneously. The CPU 18a then returns to the waiting states in Act13 to Act16.

If the operator desires to change only the reproduction situation of the video 322, the operator performs the operation in the second operation area using the input device 18f. Thereafter, the CPU 18a determines Yes in Act14, and proceeds to Act18.

In Act18, the CPU 18a changes only the reproduction situation of the video 322 according to the operation in the second operation area. For example, if the operation of instructing a pause on the video reproduction in the second operation area is performed, the CPU 18a pauses the reproduction of the video 322 while continuing the reproductions of the videos 321 and 323. Furthermore, thereafter, the CPU 18a returns to the waiting states in Act13 to Act16.

If the operator desires to change only the reproduction situation of the video 323, the operator performs an operation in the third operation area using the input device 18f. Thereafter, the CPU 18a determines Yes in Act15, and proceeds to Act19.

In Act19, the CPU 18a changes only the reproduction situation of the video 323 according to the operation in the third operation area. For example, if pausing of the video reproduction in the third operation area is performed, the CPU 18a pauses the reproduction of the video 323 while continuing the reproductions of the videos 321 and 322. Furthermore, thereafter, the CPU 18a returns to the waiting states in Act13 to Act16.

If the operator desires to cancel the video reproduction and to check the list display again, the operator performs an operation of pressing the button 330 using the input device 18f. Thereafter, the CPU 18a determines Yes in Act16, and proceeds to Act20.

In Act20, the CPU 18a stops reproductions of the videos 321, 322, and 323. Furthermore, thereafter, the CPU 18a performs the processes subsequent to Act 3 in FIG. 5 similar to the above description.

As described above, in the store computer 18, three videos, which are respectively related to the registration, the settlement, and the packing from different cameras (respectively the camera 14, the cameras 12a and 13a, and the camera 15) are simultaneously reproduced. Furthermore, the respective reproduction positions of the three videos which are reproduced as described above are shifted from each other by the time difference which is set in the management table.

Specifically, if the management table includes the content illustrated in FIG. 3, it is assumed that checkout of the transaction is performed on the checkout lane, which has the lane number "0001", using the settlement device 12. If the post verification related to the transaction is performed, videos related to the lane photographed by the cameras 14 and 12a and the video photographed by the camera 15 are simultaneously reproduced as the videos 321, 322, and 323 on the display 18e of the store computer 18. Furthermore, a start reproduction position of the video 322 is shifted by 60 seconds with respect to a start reproduction position of the video 321. In addition, a start reproduction position of the video 323 is shifted by 150 seconds with respect to the start reproduction position of the video 321, that is, is shifted by 90 seconds with respect to the start reproduction position of the video 322. FIG. 8 illustrates a state at this time, "11:02:09", which is shifted by 60 seconds with respect to the reproduction position "11:01:09" of the video 321, becomes the start reproduction position of the video 322, and, further, "11:03:39", which is shifted by 90 seconds, becomes the start reproduction position of the video 323.

As described above, the settlement in the settlement device 12 starts when the customer 22 moves to a location in order to operate the settlement device 12 after registration in the registration device 11 is completed. In addition, packing of the purchase commodity starts when the customer 22 moves to the work table 32 after settlement in the settlement device 12 is completed. Accordingly, the registration, the settlement, and the packing related to one transaction are performed at different times. However, if appropriate time difference is set in the management table, the aspects of the registration, the settlement, and the packing related to this one transaction can be simultaneously reproduced in the three videos 321, 322, and 323. Therefore, it is possible for the operator of the store computer 18 to efficiently check a transaction using the three videos 321, 322, and 323 simultaneously.

However, generally, time from the start of the registration to the start of the settlement is the sum of time in which the registration process is performed and time which is necessary for the customer 22 to move to the location to operate the settlement device 12. In addition, generally, time from the start of the settlement to the start of the packing is the sum of time in which the settlement process is performed and time which is necessary for the customer 22 to move to the work table 32. However, the specific times may be changed for each transaction according to the total number of items being purchased, the operation skill of the sales clerk, a working speed of the customer 22, an operation skill of the customer 22, a settlement method selection, and the like. Therefore, it is not required that the videos, which indicate the aspects of the registration, the settlement, and the packing related to one transaction, are entirely simultaneously reproduced. However, if some parts of the reproduction periods of the videos overlap, efficiency of checking/verification can be improved compared to a case where each videos must be sequentially reproduced.

Furthermore, it is possible to change the setting of the time difference in the management table in the store computer 18. Therefore, it is possible to perform time offset settings such that reproduction is performed with offset timings selected according to the particulars of the registration, the settlement and the packing related to one transaction that are more appropriate according to aspects such as environmental difference, such as a layout of the checkout region, content of the sales transaction, or an average age of the customer 22 at the store location.

Furthermore, since a reproduction situation of only the video 322 is changed according to the operation in the second operation area in the store computer 18, and a reproduction situation of only the video 323 is changed according to the operation in the third operation area, the time difference between the reproduction position of the video 321 and the reproduction position of the video 322 can be adjusted according to the operations in the second operation area. Likewise, the time difference between the reproduction position of the video 321 and the reproduction position of the video 323 can be adjusted according to the operation in the third operation area. Therefore, it is possible for the operator of the store computer 18 to perform manual adjustment(s) such that videos are simultaneously reproduced.

### SECOND EMBODIMENT

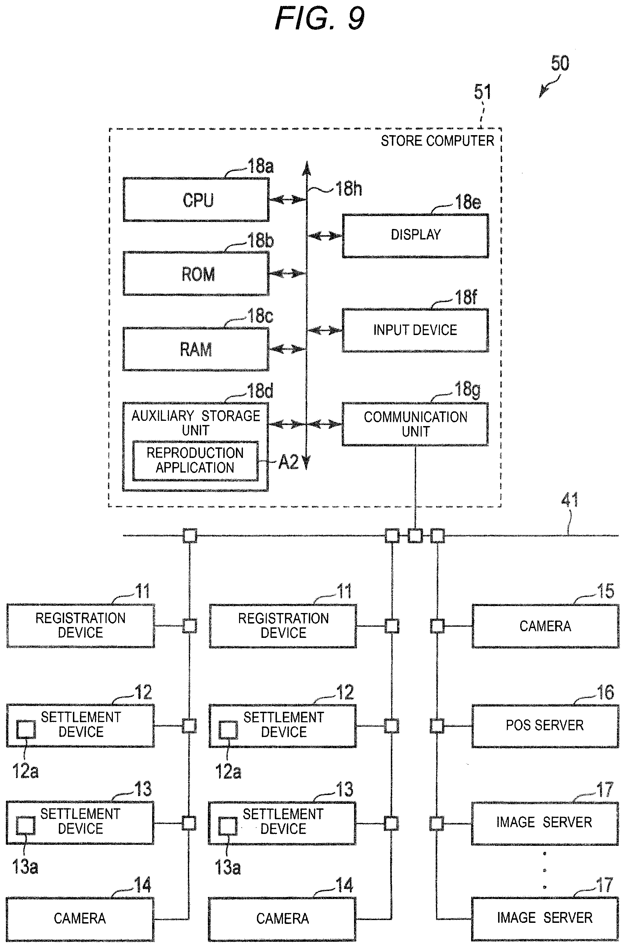

FIG. 9 is a block diagram illustrating an example configuration of a POS system 50 and a configuration of a principal part circuit of a store computer according to a second embodiment. The same reference symbols are attached to elements illustrated in FIG. 9, which are substantially the same as the elements illustrated in FIGS. 1 and 2, and the description of common elements in the embodiments will not be repeated.

A POS system 50 includes a registration device 11, a settlement device 12, a settlement device 13, a camera 14, a camera 15, a POS server 16, an image server 17, and a store computer 51. That is, the POS system 50 incorporates a store computer 51 instead of a store computer 18 of the POS system 10. In addition, the POS system 50 includes a plurality of image servers 17.

It is assumed that the POS system 50 would be used for a large store that has a large number of checkout lanes. Accordingly, although two sets of the registration device 11, the settlement devices 12 and 13, and the cameras 14 and 15 are illustrated in FIG. 9, a plurality of sets can be provided. Furthermore, the image server 17 manages and stores video data acquired by the cameras 14 and 15.

The store computer 51 has substantially the same hardware configuration as the store computer 18, and similarly includes a CPU 18a, a ROM 18b, a RAM 18c, an auxiliary storage unit 18d, a display 18e, an input device 18f, a communication unit 18g, and a transmission system 18h. However, the store computer 51 is different from the store computer 18 in that a reproduction application A2 is stored in the auxiliary storage unit 18d, instead of the reproduction application A1.

All of the image servers 17 are connected to a communication network 41, and can be individually accessed by the store computer 51.

The CPU 18a performs an information process based on the reproduction application A2. Although the process performed by the CPU 18a in this case is similar to the first embodiment, the following described aspects are different from the first embodiment.

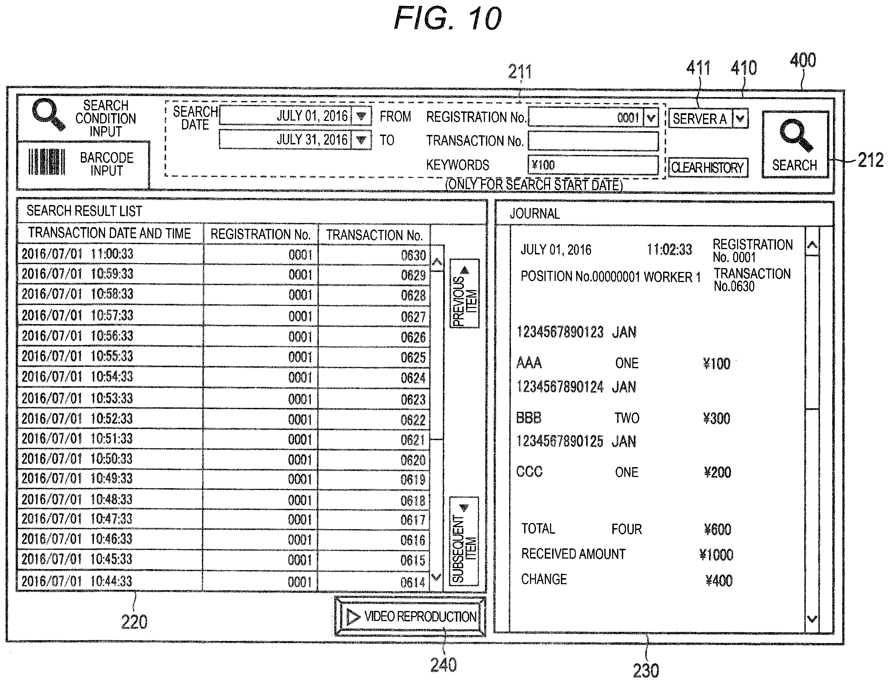

FIG. 10 is a diagram illustrating a reading screen 400 as an example.

First, the CPU 18a displays the reading screen 400 instead of the reading screen 200.

The reading screen 400 includes display areas 220, 230, a button 240, and an operation area 410. That is, the reading screen 400 includes the operation area 410 instead of the operation area 210.

The operation area 410 includes a setting area 211, a button 212, and a combo box 411. That is, the operation area 410 adds the combo box 411 to the operation area 210. The combo box 411 is a Graphical User Interface (GUI) used to select one of the image servers 17.

Furthermore, when the CPU 18a receives search conditions in the setting area 211 similar to the first embodiment, the CPU 18a also receives a designation of the image server 17 using the combo box 411.

The CPU 18a changes the process in Act12 of FIG. 6 as in the following description.

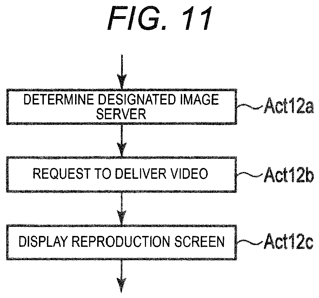

FIG. 11 is a flowchart illustrating a process performed by the CPU 18a to start reproduction of the videos according to the second embodiment.

In Act12a, the CPU 18a determines the image server 17 which is designated through the combo box 411.

In Act12b, the CPU 18a requests the image server 17 determined as described above to deliver the video. The image server 17 delivers three video data related to a particular designated transaction that is requested.

In Act12c, the CPU 18a starts displaying a reproduction screen similar to the first embodiment. Furthermore, the CPU 18a acquires the three video data delivered from the image server 17 as described above, and causes the three video data to be included in the reproduction area 320 as the respective videos 321, 322, and 323.

As described above, according to the POS system 50, it is possible to acquire similar advantages as in the first embodiment in a situation in which it is necessary to divide and store the video data in a plurality of image servers 17.

It is possible to variously modify and realize the above described respective embodiments as follows.

In the respective embodiments, the store computer 18 functions as the video reproduction device, and reproduces three videos for the registration, the settlement, and the packing pertaining to the checkout transaction. However, the videos concerning other transactions or situations may be acquired by individually photographing the respective photographing areas with cameras. For example, videos acquired by photographing respective aspects of food ordering, food cooking, food conveyance to a customer's table, and/or setting the table may captured by the various cameras.

The video data corresponding to the reproduction target may be stored in the auxiliary storage unit 18d or an additionally provided built-in storage device. In this case, the auxiliary storage unit 18d or the additionally provided built-in storage device functions as video storage means for storing the plurality of video data acquired by the plurality of cameras.

The journal data may be stored in the auxiliary storage unit 18d or the additionally provided built-in storage device. In this case, the auxiliary storage unit 18d or the additionally provided built-in storage device functions as video storage means for storing the transaction data as result data.

The video data and the journal data may be stored in a single storage device. In addition, the video data or the journal data may be divided and stored in separate storage devices.

The display of the videos may be performed on an additional external display device.

A part of the above-described information process performed by the CPU 18a may be omitted. For example, any of the processes in Act14 and Act 18 or the processes in Act15 and Act19 may be omitted. Meanwhile, the second operation area 325 can be omitted if the processes in Act14 and Act18 are omitted and the third operation area 326 is omitted from the reproduction screen 300 if the processes in Act15 and Act19 are omitted, respectively.

It is possible to realize a part or the whole of the respective functions, which are otherwise realized by the CPU 18a through information processing, as specifically configured hardware, such as a logic circuit, which performs information processing that is not based on a stored program. In addition, it is possible to realize the respective functions by combining hardware, such as the logic circuit, with software control.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined in the appended claims.

## Claims

1. A transaction reviewing system, comprising:
a display screen;
an image server configured to store video data from a plurality of cameras; **characterized by** further comprising
a video reproduction device configured to:
reproduce first video data acquired by a first camera positioned to capture aspects of a registration process conducted on a commodity sales register (11), of the plurality of cameras;
reproduce second video data acquired by a second camera positioned to capture aspects of a settlement process conducted on a settlement apparatus (12), of the plurality of cameras as shifted by a first offset time from a start time of the first video data, the first offset time corresponding to an expected time for a user to move from the commodity sales register to the settlement apparatus; and
reproduce third video data acquired by a third camera positioned to capture aspects of a packing process conducted in a commodity packing area, of the plurality of cameras as shifted by a second offset time from the start time of the first video data, the second offset time corresponding to an expected time for the user to move from the settlement apparatus (12) to a commodity packing area (32), wherein
at least parts of the first video data which indicate aspects of the registration process, of the second video data which indicate aspects of the settlement process, and of the third video data which indicate aspects of the packing process, related to one transaction, are reproduced simultaneously on the display screen.

2. The transaction reviewing system according to claim 1, wherein the expected time for the user to move from the commodity sales register to the settlement apparatus is set according to a total number of items in the sales transaction.

3. The transaction reviewing system according to any of claims 1 to 2, wherein the video reproduction device displays operation areas corresponding to the first video data, the second video data and the third video data on the display, and a reproduction situation of each video data is changed according to the operation in the operation areas.

4. The transaction reviewing system according to claims 3, wherein the operation areas contain a second operation area (325) according to the second video data and the reproduction situation of only the second video data is changed when the second operation area is operated.

5. The transaction reviewing system according to claims 3, wherein the operation areas contain a third operation area (326) according to the third video data and the reproduction situation of only the third video data is changed when the third operation area is operated.

6. The transaction reviewing system according to any of claims 1 to 5, wherein the first offset time and the second offset time are stored in a management table accessible by the video reproduction device.

7. The transaction reviewing system according to any of claims 1 to 6, wherein the plurality of cameras is in a retail store.

8. A method of video reproduction of video data from a plurality of cameras capturing different aspects of a transaction, the method comprising:
a step of storing, on an image server, video data from the plurality of cameras;
**characterized by** further comprising:
a step of reproducing, on a video reproduction device, first video data acquired by a first camera positioned to capture aspects of a registration process conducted on a commodity sales register, of the plurality of cameras;
a step of reproducing, on the video reproduction device, a second video data acquired by a second camera positioned to capture aspects of a settlement process conducted on a settlement apparatus, of the plurality of cameras as shifted by a first offset time from a start time of the first video data, the first offset time corresponding to an expected time for a user to move from the commodity sales register to the settlement apparatus; and
a step of reproducing, on the video reproduction device, third video data acquired by a third camera positioned to capture aspects of a packing process conducted in a commodity packing area, of the plurality of cameras as shifted by a second offset time from the start time of the first video data, the second offset time corresponding to an expected time for the user to move from the settlement apparatus to a commodity packing area (32), wherein
at least parts of the first video data which indicate aspects of the registration process, of the second video data which indicate aspects of the settlement process, and of the third video data which indicate aspects of the packing process, related to one transaction, are reproduced simultaneously on a display screen.

9. The method of video reproduction according to claim 8, wherein the expected time for the user to move from the commodity sales register to the settlement apparatus is set according to a total number of items in the sales transaction.

10. The method of video reproduction according to any of claims 8 to 9, further comprising a step of displaying, by the video reproduction device (18), operation areas corresponding to the first video data, the second video data and the third video data on the display screen, and changing a reproduction situation of each video data according to the operation in the operation areas.

11. The method of video reproduction according to claims 10, wherein the operation areas contain a second operation area (325) according to the second video data and the reproduction situation of only the second video data is changed when the second operation area is operated.

12. The method of video reproduction according to claims 10, wherein the operation areas contain a third operation area (326) according to the third video data and the reproduction situation of only the third video data is changed when the third operation area is operated.

## Patentansprüche

1. Transaktionsdurchsichtsystem, das umfasst:
einen Anzeigebildschirm;
einen Bildserver, der dazu konfiguriert ist, Videodaten von einer Vielzahl von Kameras zu speichern; **dadurch gekennzeichnet, dass** es weiter umfasst
eine Videowiedergabevorrichtung, die dazu konfiguriert ist:
erste Videodaten, die von einer ersten Kamera, der Vielzahl von Kameras, aufgenommen werden, die positioniert ist, um Aspekte eines Registrierungsprozesses aufzuzeichnen, der auf einem Warenverkaufsregister (11) abgewickelt wird, wiederzugeben;
zweite Videodaten, die von einer zweiten Kamera, der Vielzahl von Kameras, aufgenommen werden, die positioniert ist, um Aspekte eines Abrechnungsprozesses aufzuzeichnen, der auf einer Abrechnungseinrichtung (12) abgewickelt wird, wie um eine erste Versatzzeit ausgehend von einer Startzeit der ersten Videodaten verschoben, wiederzugeben, wobei die erste Versatzzeit einer erwarteten Zeit entspricht, damit sich ein Benutzer von dem Warenverkaufsregister zu der Abrechnungseinheit bewegt; und
dritte Videodaten, die von einer dritten Kamera, der Vielzahl von Kameras, aufgenommen werden, die positioniert ist, um Aspekte eines Verpackungsprozesses aufzuzeichnen, der in einem Warenverpackungsbereich abgewickelt wird, wie um eine zweite Versatzzeit ausgehend von einer Startzeit der ersten Videodaten verschoben, wiederzugeben, wobei die zweite Versatzzeit einer erwarteten Zeit entspricht, damit sich der Benutzer von der Abrechnungseinrichtung (12) zu dem Warenverpackungsbereich (32) bewegt; wobei
mindestens Teile der ersten Videodaten, die Aspekte des Registrierungsprozesses angeben, der zweiten Videodaten, die Aspekte des Abrechnungsprozesses angeben, und der dritten Videodaten, die Aspekte des Verpackungsprozesses angeben, im Zusammenhang mit einer Transaktion gleichzeitig auf dem Anzeigebildschirm wiedergegeben werden.

2. Transaktionsdurchsichtsystem nach Anspruch 1, wobei die erwartete Zeit, damit sich der Benutzer von dem Warenverkaufsregister zu der Abrechnungseinrichtung bewegt, gemäß einer Gesamtanzahl von Artikeln in der Verkaufstransaktion eingestellt ist.

3. Transaktionsdurchsichtsystem nach einem der Ansprüche 1 bis 2, wobei die Videowiedergabevorrichtung Betriebsbereiche, die den ersten Videodaten, den zweiten Videodaten und den dritten Videodaten entsprechen, auf der Anzeige anzeigt, und eine Wiedergabesituation der jeweiligen Videodaten gemäß dem Betrieb in den Betriebsbereichen geändert ist.

4. Transaktionsdurchsichtsystem nach Ansprüchen 3, wobei die Betriebsbereiche einen zweiten Betriebsbereich (325) gemäß den zweiten Videodaten enthalten, und die Wiedergabesituation nur der zweiten Videodaten geändert wird, wenn der zweite Betriebsbereich betrieben wird.

5. Transaktionsdurchsichtsystem nach Ansprüchen 3, wobei die Betriebsbereiche einen dritten Betriebsbereich (326) gemäß den dritten Videodaten enthalten, und die Wiedergabesituation nur der dritten Videodaten geändert wird, wenn der dritte Betriebsbereich betrieben wird.

6. Transaktionsdurchsichtsystem nach einem der Ansprüche 1 bis 5, wobei die erste Versatzzeit und die zweite Versatzzeit in einer Verwaltungstabelle, die für die Videowiedergabevorrichtung zugänglich ist, gespeichert sind.

7. Transaktionsdurchsichtsystem nach einem der Ansprüche 1 bis 6, wobei sich die Vielzahl von Kameras in einem Einzelhandelsgeschäft befindet.

8. Verfahren zur Videowiedergabe von Videodaten von einer Vielzahl von Kameras, die unterschiedliche Aspekte einer Transaktion aufzeichnen, wobei das Verfahren umfasst:
einen Schritt des Speicherns von Videodaten von der Vielzahl von Kameras auf einem Bildserver;
**dadurch gekennzeichnet, dass** es weiter umfasst:
einen Schritt des Wiedergebens auf einer Videowiedergabevorrichtung von ersten Videodaten, die von einer ersten Kamera, der Vielzahl von Kameras, aufgenommen werden, die positioniert ist, um Aspekte eines Registrierungsprozesses, der auf einem Warenverkaufsregister abgewickelt wird, aufzuzeichnen;
einen Schritt des Wiedergebens auf der Videowiedergabevorrichtung von zweiten Videodaten, die von einer zweiten Kamera, der Vielzahl von Kameras, aufgenommen werden, die positioniert ist, um Aspekte eines Abrechnungsprozesses, der auf einer Abrechnungseinrichtung abgewickelt wird, wie um eine erste Versatzzeit ausgehend von einer Startzeit der ersten Videodaten verschoben, aufzuzeichnen, wobei die erste Versatzzeit einer erwarteten Zeit entspricht, damit sich ein Benutzer von dem Warenverkaufsregister zu der Abrechnungseinheit bewegt; und
einen Schritt des Wiedergebens auf der Videowiedergabevorrichtung von dritten Videodaten, die von einer dritten Kamera, der Vielzahl von Kameras, aufgenommen werden, die positioniert ist, um Aspekte eines Verpackungsprozesses, der in einem Warenverpackungsbereich abgewickelt wird, wie um eine zweite Versatzzeit von der Startzeit der ersten Videodaten verschoben, aufzuzeichnen, wobei die zweite Versatzzeit einer erwarteten Zeit entspricht, damit sich der Benutzer von der Abrechnungseinrichtung zu einem Warenverpackungsbereich (32) bewegt, wobei
mindestens Teile der ersten Videodaten, die Aspekte des Registrierungsprozesses angeben, der zweiten Videodaten, die Aspekte des Abrechnungsprozesses angeben, und der dritten Videodaten, die Aspekte des Verpackungsprozesses angeben, im Zusammenhang mit einer Transaktion gleichzeitig auf dem Anzeigebildschirm wiedergegeben werden.

9. Verfahren zur Videowiedergabe nach Anspruch 8, wobei die erwartete Zeit, damit sich der Benutzer von dem Warenverkaufsregister zu der Abrechnungseinrichtung bewegt, gemäß einer Gesamtanzahl von Artikeln in der Verkaufstransaktion eingestellt ist.

10. Verfahren zur Videowiedergabe nach einem der Ansprüche 8 bis 9, das weiter einen Schritt des Anzeigens durch die Videowiedergabevorrichtung (18) von Betriebsbereichen, die den ersten Videodaten, den zweiten Videodaten und den dritten Videodaten entsprechen, auf dem Anzeigebildschirm und das Ändern einer Wiedergabesituation der jeweiligen Videodaten gemäß dem Betrieb in den Betriebsbereichen umfasst.

11. Verfahren zur Videowiedergabe nach Ansprüchen 10, wobei die Betriebsbereiche einen zweiten Betriebsbereich (325) gemäß den zweiten Videodaten enthalten, und die Wiedergabesituation nur der zweiten Videodaten geändert wird, wenn der zweite Betriebsbereich betrieben wird.

12. Verfahren zur Videowiedergabe nach Ansprüchen 10, wobei die Betriebsbereiche einen dritten Betriebsbereich (326) gemäß den dritten Videodaten enthalten, und die Wiedergabesituation nur der dritten Videodaten geändert wird, wenn der dritte Betriebsbereich betrieben wird.

## Revendications

1. Système de vérification de transaction, comprenant :
un écran d'affichage ;
un serveur d'image configuré pour stocker des données vidéo à partir d'une pluralité de caméras ; **caractérisé en ce qu'**il comprend en outre
un dispositif de reproduction vidéo configuré pour :
reproduire des premières données vidéo acquises par une première caméra positionnée pour capturer des aspects d'un processus d'enregistrement réalisé sur une caisse enregistreuse de ventes de marchandises (11), de la pluralité de caméras ;
reproduire des deuxièmes données vidéo acquises par une deuxième caméra positionnée pour capturer des aspects d'un processus de règlement réalisé sur un appareil de règlement (12), de la pluralité de caméras telles que modifiées d'un premier temps de décalage à partir d'un temps de début des premières données vidéo, le premier temps de décalage correspondant à un temps prévu pour qu'un utilisateur se déplace de la caisse enregistreuse de ventes de marchandises jusqu'à l'appareil de règlement ; et
reproduire des troisièmes données vidéo acquises par une troisième caméra positionnée pour capturer des aspects d'un processus d'emballage réalisé dans une zone d'emballage de marchandises, de la pluralité de caméras telles que modifiées d'un second temps de décalage à partir du temps de début des premières données vidéo, le second temps de décalage correspondant à un temps prévu pour que l'utilisateur se déplace de l'appareil de règlement (12) jusqu'à une zone d'emballage de marchandises (32), dans lequel
au moins des parties des premières données vidéo qui indiquent des aspects du processus d'enregistrement, des deuxièmes données vidéo qui indiquent des aspects du processus de règlement, et des troisièmes données vidéo qui indiquent des aspects du processus d'emballage, relatives à une transaction, sont reproduites simultanément sur l'écran d'affichage.

2. Système de vérification de transaction selon la revendication 1, dans lequel le temps prévu pour que l'utilisateur se déplace à partir de la caisse enregistreuse de ventes de marchandises jusqu'à l'appareil de règlement est défini selon un nombre total d'articles dans la transaction de ventes.

3. Système de vérification de transaction selon l'une quelconque des revendications 1 à 2, dans lequel le dispositif de reproduction vidéo affiche des zones d'opération correspondant aux premières données vidéo, aux deuxièmes données vidéo et aux troisièmes données vidéo sur l'afficheur, et une situation de reproduction de chaque donnée vidéo est changée selon l'opération dans les zones d'opération.

4. Système de vérification de transaction selon les revendications 3, dans lequel les zones d'opération contiennent une deuxième zone d'opération (325) selon les deuxièmes données vidéo et la situation de reproduction des deuxièmes données vidéo seulement est changée lorsque la deuxième zone d'opération fonctionne.

5. Système de vérification de transaction selon les revendications 3, dans lequel les zones d'opération contiennent une troisième zone d'opération (326) selon les troisièmes données vidéo et la situation de reproduction des troisièmes données vidéo seulement est changée lorsque la troisième zone d'opération fonctionne.

6. Système de vérification de transaction selon l'une quelconque des revendications 1 à 5, dans lequel le premier temps de décalage et le second temps de décalage sont stockés dans un tableau de gestion accessible par le dispositif de reproduction vidéo.

7. Système de vérification de transaction selon l'une quelconque des revendications 1 à 6, dans lequel la pluralité de caméras est dans un magasin de détail.

8. Procédé de reproduction vidéo de données vidéo à partir d'une pluralité de caméras capturant différents aspects d'une transaction, le procédé comprenant :
une étape consistant à stocker, sur un serveur d'image, des données vidéo à partir de la pluralité de caméras ;
**caractérisé en ce qu'**il comprend en outre :
une étape consistant à reproduire, sur un dispositif de reproduction vidéo, des premières données vidéo acquises par une première caméra positionnée pour capturer des aspects d'un processus d'enregistrement réalisé sur une caisse enregistreuse de ventes de marchandises, de la pluralité de caméras ;
une étape consistant à reproduire, sur le dispositif de reproduction vidéo, une deuxième donnée vidéo acquise par une deuxième caméra positionnée pour capturer des aspects d'un processus de règlement réalisé sur un appareil de règlement, de la pluralité de caméras telles que modifiées d'un premier temps de décalage à partir d'un temps de début des premières données vidéo, le premier temps de décalage correspondant à un temps prévu pour qu'un utilisateur se déplace de la caisse enregistreuse de ventes de marchandises jusqu'à l'appareil de règlement ; et
une étape consistant à reproduire, sur le dispositif de reproduction vidéo, des troisièmes données vidéo acquises par une troisième caméra positionnée pour capturer des aspects d'un processus d'emballage réalisé dans une zone d'emballage de marchandises, de la pluralité de caméras telles que modifiées d'un second temps de décalage à partir du temps de début des premières données vidéo, le second temps de décalage correspondant à un temps prévu pour que l'utilisateur se déplace de l'appareil de règlement jusqu'à une zone d'emballage de marchandises (32), dans lequel
au moins des parties des premières données vidéo qui indiquent des aspects du processus d'enregistrement, des deuxièmes données vidéo qui indiquent des aspects du processus de règlement, et des troisièmes données vidéo qui indiquent des aspects du processus d'emballage, relatives à une transaction, sont reproduites simultanément sur un écran d'affichage.

9. Procédé de reproduction vidéo selon la revendication 8, dans lequel le temps prévu pour que l'utilisateur se déplace à partir de la caisse enregistreuse de ventes de marchandises jusqu'à l'appareil de règlement est défini selon un nombre total d'articles dans la transaction de ventes.

10. Procédé de reproduction vidéo selon l'une quelconque des revendications 8 à 9, comprenant en outre une étape consistant à afficher, par le dispositif de reproduction vidéo (18), des zones d'opération correspondant aux premières données vidéo, aux deuxièmes données vidéo et aux troisièmes données vidéo sur l'écran d'affichage, et changer une situation de reproduction de chaque donnée vidéo selon l'opération dans les zones d'opération.

11. Procédé de reproduction vidéo selon les revendications 10, dans lequel les zones d'opération contiennent une deuxième zone d'opération (325) selon les deuxièmes données vidéo et la situation de reproduction des deuxièmes données vidéo seulement est changée lorsque la deuxième zone d'opération fonctionne.

12. Procédé de reproduction vidéo selon les revendications 10, dans lequel les zones d'opération contiennent une troisième zone d'opération (326) selon les troisièmes données vidéo et la situation de reproduction des troisièmes données vidéo seulement est changée lorsque la troisième zone d'opération fonctionne.
